(19) **Europäisches Patentamt**

**European Patent Office**

**Office européen des brevets**

(11) **EP 1 103 090 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(21) Anmeldenummer: **99941442.8**

(22) Anmeldetag: **19.07.1999**

(51) Int Cl.$^7$: **H01S 3/094**

(86) Internationale Anmeldenummer:
**PCT/EP99/05129**

(87) Internationale Veröffentlichungsnummer:
**WO 00/08728 (17.02.2000 Gazette 2000/07)**

(54) **LASERVERSTÄRKERSYSTEM**

LASER AMPLIFICATION SYSTEM

SYSTEME D'AMPLIFICATION LASER

(84) Benannte Vertragsstaaten:
**DE FR GB IT**

(30) Priorität: **04.08.1998 DE 19835107**

(43) Veröffentlichungstag der Anmeldung:
**30.05.2001 Patentblatt 2001/22**

(73) Patentinhaber: **UNIVERSITÄT STUTTGART INSTITUT FÜR STRAHLWERKZEUGE**
**70569 Stuttgart (DE)**

(72) Erfinder:
- **ERHARD, Steffen**
  **D-70734 Fellbach (DE)**
- **GIESEN, Adolf**
  **D-71272 Renningen (DE)**
- **KARSZEWSKI, Martin**
  **D-71272 Renningen (DE)**
- **STEWEN, Christian**
  **D-70771 Leinfelden-Echterdingen (DE)**
- **VOSS, Andreas**
  **D-78713 Schramberg (DE)**

(74) Vertreter: **Beck, Jürgen,**
**Hoeger, Stellrecht & Partner,**
**Uhlandstrasse 14**
**70182 Stuttgart (DE)**

(56) Entgegenhaltungen:
**EP-A- 0 632 551**

- **GIESEN A ET AL: "SCALABLE CONCEPT FOR DIODE-PUMPED HIGH-POWER SOLID-STATE LASERS" APPLIED PHYSICS B: LASERS AND OPTICS,DE,SPRINGER INTERNATIONAL, BERLIN, Bd. B58, Nr. 5, Seite 365-372 XP000452026 ISSN: 0946-2171**
- **BRAUCH U ET AL: "MULTIWATT DIODE-PUMPED YB:YAG THIN DISK LASER CONTINUOUSLY TUNABLE BETWEEN 1018 AND 1053 NM" OPTICS LETTERS,US,OPTICAL SOCIETY OF AMERICA, WASHINGTON, Bd. 20, Nr. 7, Seite 713-715 XP000497428 ISSN: 0146-9592**

## Beschreibung

Die Erfindung betrifft ein Laserverstärkersystem, umfassend einen ein laseraktives Medium aufweisenden Festkörper, eine Pumpstrahlungsquelle zur Erzeugung eines Pumpstrahlungsfeldes, welches den Festkörper mehrfach durchsetzt, eine Pumpstrahlungsabbildungsoptik, welche zwischen der Pumpstrahlungsquelle und dem Festkörper angeordnet ist und einen in den Festkörper einfallenden Ast des Pumpstrahlungsfeldes auf den Festkörper fokussiert, und mindestens eine Refokussierungsoptik, welche einen aus dem Festkörper ausfallenden Ast des Pumpstrahlungsfeldes erneut in Form eines in den Festkörper einfallenden und vom ausfallenden Ast verschiedenen Astes auf den Festkörper fokussiert.

Ein derartiges Laserverstärkungssystem ist beispielsweise aus der EP 0 632 551 bekannt. Bei diesem Laserverstärkungssystem wird der aus dem Festkörper ausfallende Ast lediglich umgelenkt und auf den Festkörper refokussiert.

Der Nachteil einer derartigen Refokussierungsoptik besteht darin, daß mit dieser der Querschnitt des zu fokussierenden Pumpstrahlungsfeldes stets vergrößert wird oder erhebliche Verluste dadurch auftreten, daß ein Teil des Pumpstrahlungsfeldes nicht wieder auf den Festkörper refokussiert wird. Insgesamt ist somit das Erzielen einer möglichst hohen Pumpstrahlungsleistungsdichte in dem Festkörper problematisch, insbesondere unter der Prämisse, daß möglichst viele Durchgänge des Pumpstrahlungsfeldes anzustreben sind, da die Absorption des laseraktiven Mediums in dem Festkörper bei einem einmaligen Durchgang der Pumpleistung gering ist.

Der Erfindung liegt daher die Aufgabe zugrunde, ein Laserverstärkersystem der gattungsgemäßen Art derart zu verbessern, daß mit möglichst geringem Aufwand eine möglichst hohe Pumpstrahlungsleistungsdichte im Festkörper erzeugbar ist.

Diese Aufgabe wird bei einem Laserverstärkersystem der eingangs beschriebenen Art erfindungsgemäß dadurch gelöst, daß die Refokussierungsoptik den aus dem Festkörper ausfallenden Ast in einen zwischenkollimierten Ast umformt und den zwischenkollimierten Ast in einen erneut in den Festkörper einfallenden und auf diesen fokussierten Ast umformt.

Der Vorteil der erfindungsgemäßen Lösung ist darin zu sehen, daß durch das Erzeugen eines zwischenkollimierten Astes die Möglichkeit besteht, trotz Refokussierung den Durchmesser des Pumplichtflecks ungefähr gleich zu halten, ohne daß das für den fokussierten Ast der Refokussierungsoptik erforderliche optische Element an einen großen Strahlquerschnitt angepaßt werden muß. Darüber hinaus läßt sich auch die Abbildungsqualität bei der Refokussierung im wesentlichen konstant halten.

Besonders günstig ist es, wenn das Pumpstrahlungsfeld mehrere Refokussierungsoptiken in Reihe nacheinander durchsetzt, da dann deren Vorteile hinsichtlich der Abbildungsqualität besonders zu Tage treten, insbesondere im Hinblick auf einen im wesentlichen konstanten maximalen Querschnitt des Pumpstrahlungsfeldes bei im wesentlichen gleichem Pumpstrahlungsfleckdurchmesser.

Rein prinzipiell wäre es beim Vorsehen mehrerer Fokussierungsoptiken denkbar, nicht nur einen Festkörper zu pumpen, sondern damit mehrere Festkörper zu pumpen.

Die erfindungsgemäßen Vorteile treten jedoch dann besonders deutlich zu Tage, wenn die einfallenden Äste der mehreren Refokussierungsoptiken in denselben Festkörper einfallen, so daß insbesondere die Möglichkeit besteht, in ein und demselben Festkörper bei einem im wesentlichen konstanten Pumpstrahlungsfleckdurchmesser mit ein und demselben Pumpstrahlungsfeld das laseraktive Medium unter optimaler Ausnutzung der Leistung der Pumpstrahlungsquelle zu pumpen.

Besonders günstig läßt sich dies dann realisieren, wenn die in denselben Festkörper einfallenden Äste in denselben Volumenbereich des Festkörpers einfallen, so daß unter Ausnutzung der Tatsache, daß sich ein konstanter Pumpstrahlungsfleckdurchmesser erzeugen läßt, auch ein im Querschnitt diesem Pumpstrahlungsfleckdurchmesser entsprechender Volumenbereich durch die mehreren Refokussierungsoptiken mehrfach gepumpt werden kann und somit eine besonders hohe Ausnutzung der Pumpstrahlungsleistung gewährleistet ist.

Ein insbesondere geometrisch besonders günstig realisierbares Ausführungsbeispiel des erfindungsgemäßen Laserverstärkersystems sieht vor, daß jede Refokussierungsoptik den aus dem Festkörper ausfallenden Ast des Pumpstrahlungsfeldes zu einem ersten Teilast des zwischenkollimierten Astes umformt, diesen ersten Teilast in einen zweiten, neben diesem verlaufenden Teilast des zwischenkollimierten Astes umformt und aus dem zweiten Teilast den in den Festkörper einfallenden Ast bildet.

Durch eine derartige Faltung des zwischenkollimierten Astes in zwei Teiläste läßt sich die Refokussierungsoptik hinsichtlich des erforderlichen Raumbedarfs besonders günstig ausführen.

Eine derartige Faltung des zwischenkollimierten Astes läßt sich insbesondere dann günstig erreichen, wenn jede Refokussierungsoptik ein Umlenkelement zur Abbildung des ersten Teilastes des zwischenkollimierten Astes in den zweiten Teilast desselben aufweist.

Hinsichtlich der weiteren Ausbildung der Refokussierungsoptik wurden keine näheren Angaben gemacht. So sieht ein vorteilhaftes Ausführungsbeispiel vor, daß jede Refokussierungsoptik ein kollimierendes Element zur Abbildung des ausfallenden Astes in den zwischenkollimierten Ast aufweist. Damit ist in einfacher Weise die Abbildung des ausfallenden Astes in den zwischenkollimierten Ast realisierbar.

Ferner sieht ein weiteres Ausführungsbeispiel vor, daß jede Refokussierungsoptik ein fokussierendes Element zur Abbildung des zwischenkollimierten Astes in den in den Festkörper einfallenden Ast aufweist.

Rein prinzipiell wäre es bei der erfindungsgemäßen Lösung möglich, das Pumpen des Festkörpers so durchzuführen, daß die Pumpstrahlungsquelle jeweils den Festkörper beim Übergang von einer Refokussierungsoptik zur anderen Refokussierungsoptik reflexionsfrei durchsetzt.

Eine besonders günstige Konfiguration ist jedoch dann erreichbar, wenn einer Flachseite des Festkörpers ein Reflektor zugeordnet ist und der ausfallende Ast durch Reflexion des einfallenden Astes an dem Reflektor entsteht, da in diesem Fall bereits durch die Reflexion ein Zweifachpumpen des Festkörpers erfolgt.

Hinsichtlich der Ausrichtung der einzelnen Äste zu dem Reflektor wurden bislang keine näheren Angaben gemacht. So lassen sich besonders günstige Verhältnisse dann erreichen, wenn ein Teilast des zwischenkollimierten Astes jeder Refokussierungsoptik parallel zu einer Normalen auf einer Reflexionsfläche des Reflektors verläuft.

Noch günstigere Abbildungsverhältnisse lassen sich dann schaffen, wenn beide Teiläste des zwischenkollimierten Astes der Refokussierungsoptiken parallel zu der Normalen verlaufen.

Ein in den Festkörper einfallender Ast und der durch dessen Reflexion an dem Reflektor entstehende ausfallende Ast des Pumpstrahlungsfeldes definieren eine durch die Normale auf der Reflexionsfläche des Reflektors verlaufenden Ebene.

Vorzugsweise sind bei einer derartigen Lösung die Refokussierungsoptiken so ausgebildet, daß der aus dem Festkörper ausfallende Ast und der in den Festkörper einfallende Ast jeder Refokussierungsoptik in unterschiedlichen, durch die Normale hindurch verlaufenden Ebenen liegen.

Hinsichtlich der Anordnung der kollimierenden Elemente der Refokussierungsoptiken wurden bislang keine einzelnen Angaben gemacht. So sieht ein vorteilhaftes Ausführungsbeispiel vor, daß die kollimierenden Elemente aller Refokussierungsoptiken um die Normale herum angeordnet sind.

Vorzugsweise ist dabei vorgesehen, daß die kollimierenden Elemente aller Refokussierungsoptiken in gleichem radialem Abstand um die Normale herum angeordnet sind.

Ferner ist es besonders vorteilhaft, daß die kollimierenden-Elemente aufeinanderfolgender Refokussierungsoptiken in gleichen Winkelabständen um die Normale herum angeordnet sind.

Eine hinsichtlich der optischen Qualität der Refokussierung besonders günstige Lösung sieht dabei vor, daß die kollimierenden Elemente aller Refokussierungsoptiken identisch ausgebildet sind.

In gleicher Weise ist vorzugsweise hinsichtlich der fokussierenden Elemente vorgesehen, daß die fokussierenden Elemente aller Refokussierungsoptiken um die Normale herum angeordnet sind.

Dabei ist es besonders günstig, wenn die fokussierenden Elemente aller Refokussierungsoptiken in gleichen radialen Abständen um die Normale angeordnet sind.

Hinsichtlich der Winkelabstände ist es ebenfalls vorteilhaft, wenn die fokussierenden Elemente aufeinanderfolgender Refokussierungsoptiken in gleichen Winkelabständen um die Normale angeordnet sind.

Besonders günstig ist es, wenn die fokussierenden Elemente aller Refokussierungsoptiken identisch ausgebildet sind.

Hinsichtlich der Ausbildung der kollimierenden Elemente im einzelnen wurden bislang keine näheren Angaben gemacht. So wäre es beispielsweise denkbar, als kollimierende Elemente Linsen einzusetzen. Ein besonders günstiger Aufbau läßt sich dann erreichen, wenn die kollimierenden Elemente durch Hohlspiegel gebildet sind.

Besonders zweckmäßig ist es, wenn als Hohlspiegel im Querschnitt parabolische oder im Querschnitt kreisbogenförmige Spiegel zum Einsatz kommen.

Diese Spiegel könnten prinzipiell so ausgebildet sein, daß sie einen Linienfokus erzeugen.

Besonders günstig ist es jedoch, wenn die Hohlspiegel so ausgebildet sind, daß sie im wesentlichen einen punktförmigen Fokus erzeugen.

Eine besonders vorteilhafte Form der kollimierenden Elemente sieht vor, daß diese durch Segmente eines rotationssymmetrischen Spiegels gebildet sind, wobei der Spiegel vorzugsweise zur Normalen auf der Reflexionsfläche rotationssymmetrisch ausgebildet ist.

Auch hinsichtlich der fokussierenden Elemente wurden keine näheren Angaben gemacht. Prinzipiell wäre es auch denkbar, die fokussierenden Elemente als Linsen auszuführen. Auch diesbezüglich haben sich insbesondere Hohlspiegel als vorteilhaft erwiesen.

Zweckmäßigerweise sind die Hohlspiegel als im Querschnitt parabolische oder kreisbogenförmige Spiegel ausgebildet.

Auch hinsichtlich der Hohlspiegel wäre es denkbar, solche einzusetzen, welche einen Linienfokus erzeugen. Besonders günstig ist es jedoch, wenn die fokussierenden Elemente durch Segmente eines rotationssymmetrischen Spiegels gebildet sind, wobei der rotationssymmetrische Spiegel vorzugsweise ebenfalls zur Normalen auf der Reflexionsfläche rotationssymmetrisch ausgebildet ist.

Hinsichtlich der Brennweite der kollimierenden Elemente und der fokussierenden Elemente wurden bislang keine näheren Angaben gemacht. So wäre es prinzipiell denkbar, unterschiedliche Brennweiten einzusetzen. Als besonders zweckmäßig hat es sich jedoch erwiesen, wenn alle kollimierenden Elemente der Refokussierungsoptiken dieselbe Brennweite aufweisen.

Ferner hat es sich als vorteilhaft erwiesen, wenn alle fokussierenden Elemente der Refokussierungsoptiken dieselbe Brennweite aufweisen.

Eine besonders günstige Lösung sieht vor, daß sowohl die kollimierenden als auch die fokussierenden Elemente aller Refokussierungsoptiken dieselbe Brennweite aufweisen.

Eine hinsichtlich der Herstellung und Justierung der kollimierenden und fokussierenden Elemente zweckmäßige Lösung sieht vor, daß die kollimierenden Elemente und die fokussierenden Elemente aller Refokussierungsoptiken durch Segmente eines einzigen rotationssymmetrischen Hohlspiegels gebildet sind. In diesem Fall wäre es jedoch noch denkbar, die einzelnen Segmente relativ zueinander geneigt oder gekippt anzuordnen.

Noch einfacher ist daher eine Lösung, bei welcher die kollimierenden Elemente und die fokussierenden Elemente aller Refokussierungsoptiken durch Segmente eines einzigen rotationssymmetrischen Hohlspiegels mit zusammenhängender Spiegelfläche gebildet sind, so daß sowohl die kollimierenden Elemente als auch die fokussierenden Elemente dieselbe Ausrichtung relativ zur Rotationsachse des rotationssymmetrischen Hohlspiegels, insbesondere zur Normalen auf der Reflexionsfläche des Reflektors, aufweisen.

Hinsichtlich der Anordnung der Umlenkelemente aller Refokussierungsoptiken wurden bislang keine näheren Angaben gemacht. So sieht ein vorteilhaftes Ausführungsbeispiel vor, daß die Umlenkelemente aller Refokussierungsoptiken um die Normale herum angeordnet sind.

Vorzugsweise ist dabei vorgesehen, daß die Umlenkelemente aller Refokussierungsoptiken in gleichen radialen Abständen um die Normale angeordnet sind.

Eine geometrisch besonders günstige Lösung sieht vor, daß die Umlenkelemente aufeinanderfolgender Refokussierungsoptiken in gleichen Winkelabständen um die Normale herum angeordnet sind.

Eine konstruktiv besonders günstige Lösung sieht vor, daß die Umlenkelemente aller Refokussierungsoptiken identisch ausgebildet sind.

Hinsichtlich der relativen Anordnung des kollimierenden Elements und des fokussierenden Elements jeder der Refokussierungsoptiken wurden bislang keine näheren Angaben gemacht. So wäre es beispielsweise denkbar, die Abstände zwischen den kollimierenden Elementen und den fokussierenden Elementen beliebig zu wählen. Besonders günstige Abbildungsverhältnisse lassen sich jedoch dann erreichen, wenn bei jeder Refokussierungsoptik der Abstand zwischen dem kollimierenden Element und dem fokussierenden Element im wesentlichen der Summe deren Brennweiten entspricht. Besonders vorteilhaft ist es, insbesondere bei gleichen Brennweiten, wenn der Abstand zwischen dem kollimierenden Element und dem fokussierenden Element ungefähr der doppelten Brennweite derselben beträgt.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:

Fig. 1 eine perspektivische Ansicht eines ersten Ausführungsbeispiels eines erfindungsgemäßen Laserverstärkersystems von vorne oben gesehen;

Fig. 2 eine perspektivische Ansicht des ersten Ausführungsbeispiels des erfindungsgemäßen Laserverstärkersystems von hinten unten gesehen;

Fig. 3 eine perspektivische Darstellung der jeweils in den Festkörper einfallenden und durch Reflexion ausfallenden Äste des erfindungsgemäßen Laserverstärkersystems, wobei in den Figuren 3a bis 3d jeweils ein einfallender Ast und ein entsprechender ausfallender Ast dargestellt sind;

Fig. 4 eine Darstellung der jeweils in einer Ebene liegenden einfallenden und ausfallenden Äste gemäß Fig. 3, wobei die Fig. 4a bis 4d den Darstellungen gemäß Fig. 3a bis 3d entsprechen;

Fig. 5 eine Draufsicht in Richtung der Pfeile A in Fig. 3 mit den Figuren 3a bis 3d entsprechenden Figuren 5a bis 5d;

Fig. 6 eine schematische Darstellung der Abbildung mit Zwischenkollimation bei dem ersten Ausführungsbeispiel gemäß Fig. 1 bis 5 und

Fig. 7 eine schematische perspektivische und teilweise Darstellung eines zweiten Ausführungsbeispiels eines erfindungsgemäßen Laserverstärkersystems.

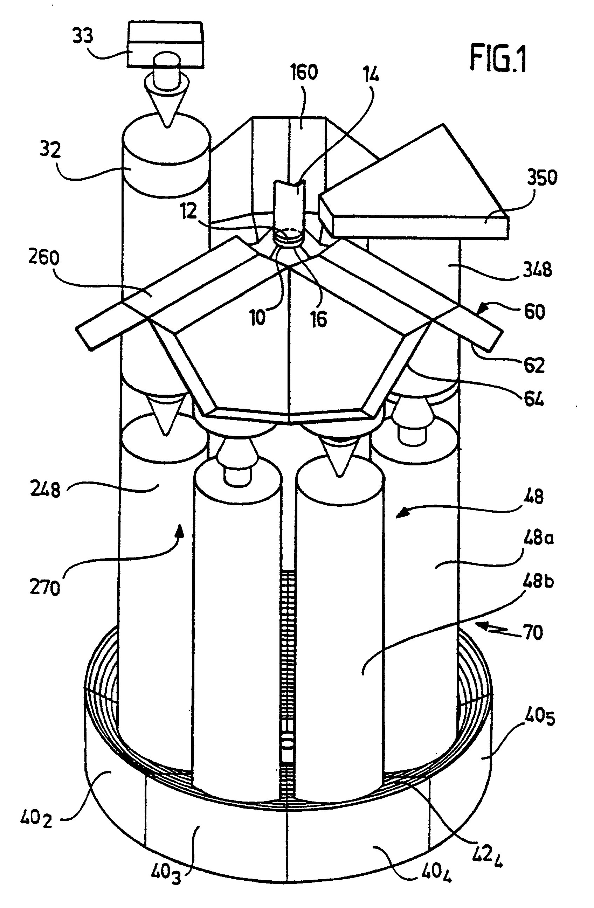

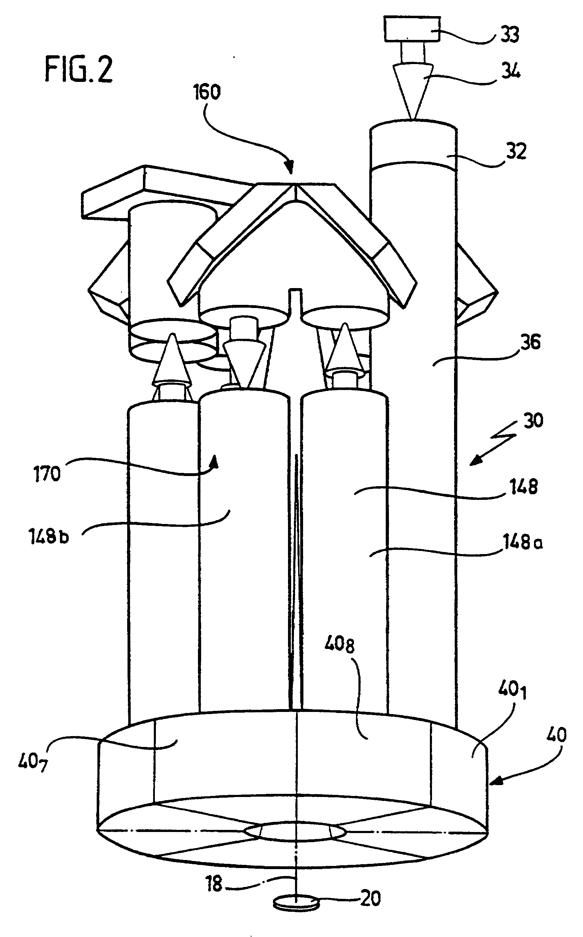

Ein Ausführungsbeispiel eines erfindungsgemäßen Laserverstärkersystems, dargestellt in den Figuren 1 bis 4, umfaßt einen scheibenförmigen ein laseraktives Medium aufweisenden Festkörper 10, welcher eine rückseitige und eine frontseitige Flachseite aufweist, welche entweder eben oder gewölbt sein können. Der Festkörper 10 liegt mit der rückseitigen Flachseite auf einem Reflektor 12 auf, wobei der Reflektor 12 seinerseits auf einer Stirnfläche eines Kühlfingers 14 sitzt, so daß der Kühlfinger 14 den Festkörper 10 über den zwischen diesem liegenden Reflektor 12 kühlt. In diesem Festkörper 10 wird über die frontseitige Flachseite 16, wie nachfolgend im einzelnen beschrieben, ein Pumpstrahlungsfeld eingekoppelt, teilweise vom laseraktiven Medium absorbiert, am Reflektor 12 reflektiert, teilweise vom laseraktiven Medium absorbiert und dann ausgekoppelt. Außerdem tritt aus dieser Flachseite ein Laserstrahlungsfeld 18 aus, welches auf einen dem Festkörper 10 zugewandten Spiegel 20 trifft, welcher gemeinsam mit dem Reflektor 12 einen Resonator für das Laserstrahlungsfeld 18 bildet.

Ein derartiges Lasersystem arbeitet so, wie dies beispielsweise in der EP 0 632 551 beschrieben ist, auf welche hinsichtlich der Arbeitsweise des Lasers und der Anordnung des Festkörpers auf dem Reflektor 12 und dem Kühlfinger 14 vollinhaltlich Bezug genommen wird.

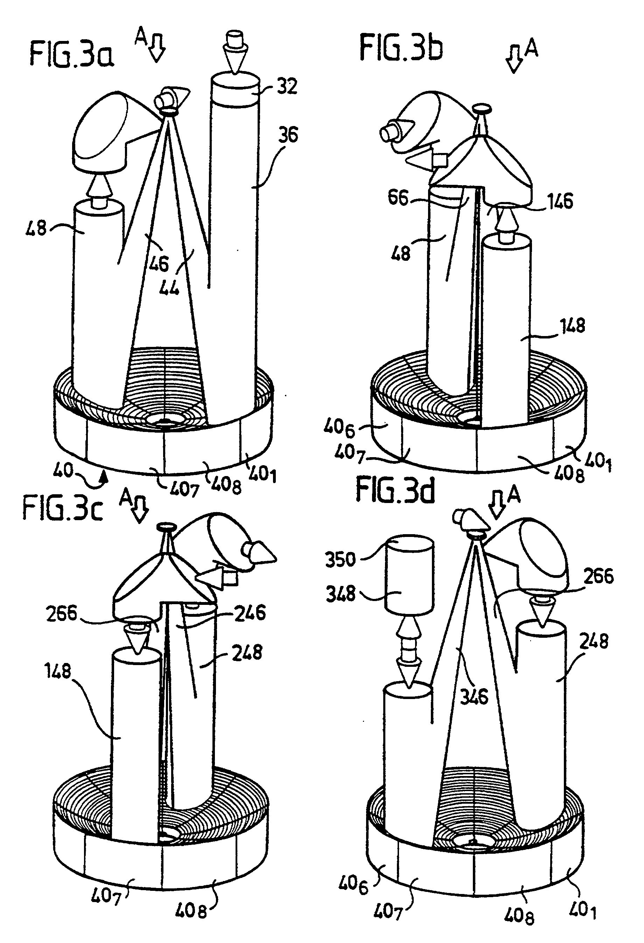

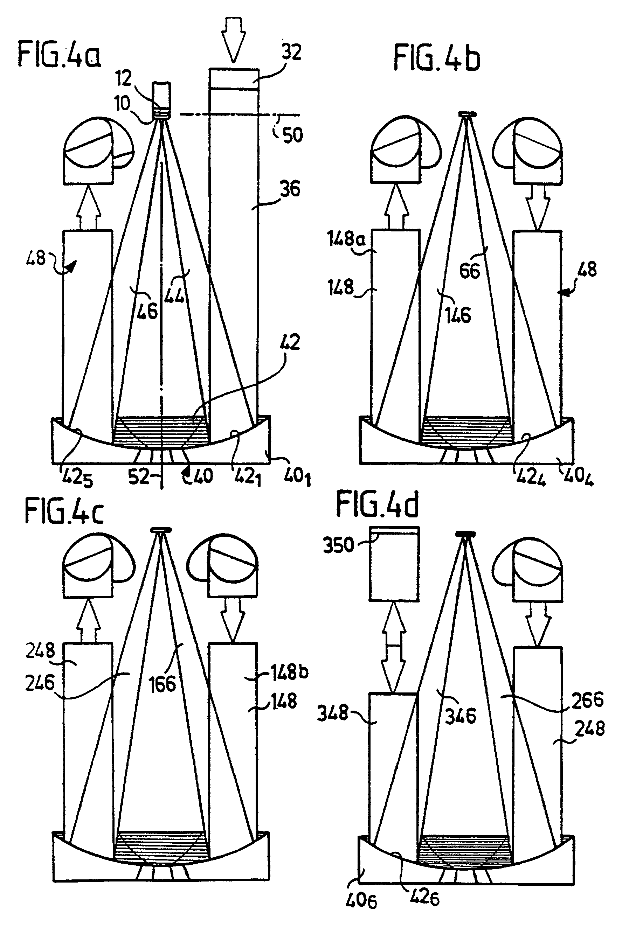

Zum Pumpen des laseraktiven Mediums in dem Festkörper 10 ist ein als Ganzes mit 30 bezeichnetes Pumpstrahlungseinkopplungssystem vorgesehen, welches eine Pumpstrahlungsabbildungsoptik 32 aufweist, die von einer Pumpstrahlungsquelle 33, beispielsweise einem Diodenlaser - oder auch mehreren Diodenlasern- und einen an diesen angekoppelten Lichtleiter, kommende Pumpstrahlungsfeld 34 kollimiert und als kollimierten Ast 36 auf ein Segment $40_1$ eines als Ganzes mit 40 bezeichneten Parabolspiegels fallen läßt, welches, wie in Fig. 3a und Fig. 4a dargestellt, mit seinem reflektierenden parabolischen Flächensegment $42_1$ einen fokussierten Ast 44 des Pumpstrahlungsfeldes erzeugt, welcher einen in den Festkörper 10 einfallenden Ast bildet.

Dieser einfallende Ast 44 der Pumpstrahlungsfeldes tritt über die frontseitige Flachseite 16 des Festkörpers 10 in diesen ein, durchdringt diesen und wird von dem Reflektor 12 reflektiert, und zwar so, daß sich ein divergierender ausfallender Ast 46 bildet, welcher auf ein reflektierendes parabolisches Flächensegment $42_5$ des Segments $40_5$ des Parabolspiegels 40 auftrifft und von diesem als erster Teilast 48a eines als Ganzes mit 48 bezeichneten kollimierten Astes reflektiert wird.

Um ausgehend von dem kollimierten Ast 36 über den einfallenden Ast 44, den ausfallenden Ast 46 wieder den kollimierten Teilast 48a zu erhalten, ist der Parabolspiegel 40 so angeordnet, daß der Festkörper 10, vorzugsweise mit seiner auf dem Reflektor 12 aufliegenden Flachseite, in einer Fokusebene 50 des Parabolspiegels 40 liegt und daß außerdem eine Normale 52 auf der reflektierenden Fläche des Reflektors 12 die Symmetrieachse zur parabolischen Fläche 42 darstellt und somit auch durch einen Fokus derselben verläuft.

Ferner ist vorzugsweise vorgesehen, daß sich der kollimierte Ast 36 parallel zur Normalen 52 erstreckt und mit dieser Ausrichtung auf das Flächensegment $42_1$ fällt und außerdem der Teilast 48a ebenfalls sich parallel zur Normalen 52 erstreckt.

Vorzugsweise bildet dabei die Normale 52 ebenfalls eine Mittelsenkrechte zu dem Festkörper 10, so daß durch den einfallenden Ast 44 und den ausfallenden Ast 46 ein Pumpen in einem zur Normalen 52 symmetrisch angeordneten Volumenbereich des Festkörpers 10 erfolgt.

Ferner liegen bei dieser geometrischen Anordnung der einfallende Ast 44 und der ausfallende Ast 46 jeweils parallel und spiegelsymmetrisch zu einer Ebene 54, welche durch die Normale 52 hindurch verläuft.

Der Teilast 48a des kollimierten Astes 48 breitet sich nun ausgehend von dem Flächensegment $42_5$ in Richtung parallel zur Normalen 52 so weit aus, bis er auf ein in Fig. 1 dargestelltes Umlenkelement 60 trifft, welches beispielsweise so ausgebildet ist, daß es zwei rechtwinklig zueinander verlaufende Spiegelflächen 62 und 64 aufweist, die so ausgerichtet sind, daß der Teilast 48a des kollimierten Astes 48 in einen Teilast 48b abgebildet wird, der sich parallel zum Teilast 48a, jedoch neben diesem erstreckt, wie in Fig. 1 dargestellt, und sich wiederum in Richtung des Parabolspiegels 40 ausbreitet und dabei auf ein Flächensegment $40_4$ des Parabolspiegels 40 trifft, dessen reflektierendes parabolisches Flächensegment $42_4$, wie in Fig. 4b dargestellt, einen wiederum in den Festkörper 10 einfallenden Ast 66 erzeugt.

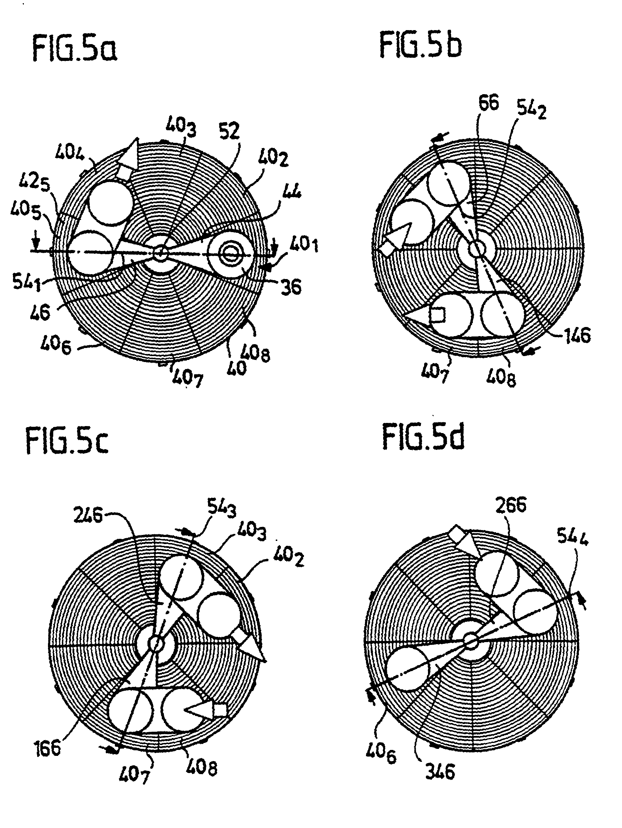

Insgesamt bilden somit die Segmente $40_5$ und $40_4$ des Parabolspiegels 40 sowie die Umlenkoptik 60 eine als Ganzes mit 70 bezeichnete Refokussierungsoptik, welche den ausfallenden Ast 46 in den kollimierten Ast 48 abbildet und diesen wieder in den in den Festkörper 10 einfallenden Ast 66 abbildet, wobei der einfallende Ast 66, wie sich aus Fig. 5b ergibt, nunmehr in einer Ebene $54_2$ liegt, welche zwar durch die Normale 52 hindurch verläuft, jedoch gegenüber der Ebene $54_1$ verdreht ist, in diesem Fall um einen Winkel von 45°.

Der in den Festkörper 10 einfallende Ast 66 wird nun von dem dem Festkörper 10 zugeordneten Reflektor 12 reflektiert und erreicht als ausfallender Ast 146 das Segment $40_8$ des Parabolspiegels 40, welches mit einer Umlenkoptik 160 einen zu dem neben diesem liegenden Segment $40_7$ verlaufenden kollimierten Strahl 148 mit den Teilästen 148a und 148b bildet, den das Segment $40_7$ in einen einfallenden Ast 166 abbildet, welcher erneut in den Festkörper 10 einfällt, in diesem Fall jedoch symmetrisch zu einer Ebene $54_3$ verläuft, die durch die Normale 52 verläuft und gegenüber der Ebene $54_2$ wiederum um 45° gedreht ist, so daß die Segmente $40_8$ und $40_7$ sowie die Umlenkoptik 160 insgesamt eine weitere Refokussierungsoptik 170 bilden (Fig. 4c und 5c).

Der wiederum aus dem Festkörper 10 durch Reflexion am Reflektor 12 ausfallende Ast 246 wird nun durch eine weitere Refokussierungsoptik 270, gebildet aus den Segmenten $40_2$ und $40_3$ sowie einer Umlenkoptik 260 unter Bildung eines kollimierten Astes 248 und Bildung eines weiteren einfallenden Astes 266 wiederum auf den Festkörper 10 fokussiert, wobei der einfallende Ast 266 nunmehr in einer Ebene $54_4$ liegt, welche gegenüber der Ebene $54_3$ nochmals um 45° verdreht ist. Der vom Reflektor 12 wiederum reflektierte ausfallende Ast 346 trifft, wie in Fig. 4d und Fig. 5d dargestellt, auf das Segment $40_6$ des Parabolspiegels 40, dessen parabolisches reflektierendes Flächensegment $42_6$ den ausfallenden divergenten Ast 346 in einen kollimierten Ast 348 abbildet, der auf einen - Reflektor 350 trifft, welcher diesen in sich zurückreflektiert, so daß das Pumpstrahlungsfeld die Refokussierungsoptiken 270, 170 und 70 erneut in umgekehrter Richtung durchläuft und dabei wiederum den Festkörper 10 mehrfach durchsetzt und jeweils an dem Reflektor 12 reflektiert wird, so daß letztlich das zurücklaufende Pumpstrahlungsfeld wiederum in Form eines kollimierten Astes 36' sich in Richtung der Pumpstrahlungsabbildungsoptik 32 und somit auch der Pumpstrahlungsquelle 33 ausbreitet, wobei in diesem Fall jedoch diese Pumpstrahlungsfeld gegenüber der einfallenden Pumpstrahlungsfeld 34 aufgrund des insgesamt sechzehnfachen Durchgangs durch den Festkörper 10 hinsichtlich seiner Intensität erheblich abgeschwächt ist.

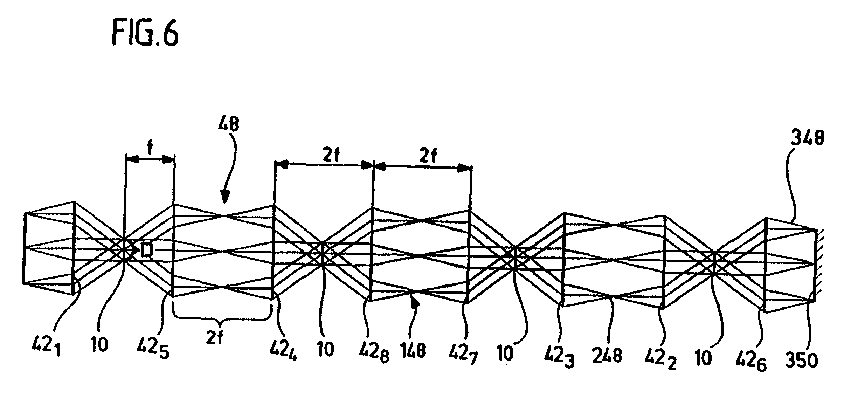

Vorzugsweise sind jeweils die Refokussierungsoptiken 70, 170 und 270 so ausgebildet, daß die kollimierten Äste 48, 148 und 248 hinsichtlich ihres Verhaltens bei der optischen Abbildung, wie in Fig. 6 dargestellt, so verhalten, wie wenn sie im Abstand 2f angeordnet wären, wobei f die Brennweite des Parabolspiegels 40 darstellt und den Abstand zwischen der parabolischen Fläche 42 und der Brennebene 50 definiert.

Mit einer derartigen Ausbildung der Refokussierungsoptiken 70, 170 und 270 besteht, wie in Fig. 6 dargestellt, die Möglichkeit, das Pumpstrahlungsfeld stets mit im wesentlichen demselben Pumpfleckdurchmesser D auf dem Festkörper 10 zu fokussieren, wobei der Pumpfleckdurchmesser von der Divergenz des Pumpstrahlungsfeldes und der Brennweite des Parabolspiegels 40 abhängig ist.

Beispielsweise gilt, abgesehen von Abbildungsfehlern, daß der Pumpfleckdurchmesser D sich im Fall einer optischen Faser zur Zufuhr der Pumplichtstrahlung wie folgt ergibt

$$D = f/fk \times d,$$

wobei fk die Brennweite der Kollimationsoptik für die Kollimierung des Pumpstrahlungsfeldes ist und d der Durchmesser der Faser, aus welcher das Pumpstrahlungsfeld auftritt.

Mit der erfindungsgemäßen Dimensionierung der Refokussierungsoptiken so, daß diese ungefähr die Brennweite f haben, - insbesondere bei Verwendung eines Parabolspiegels 40, dessen Segmente $40_1$ bis $40_8$ dieselbe Brennweite f aufweisen - und der Führung des jeweiligen kollimierten Astes 48, 148 und 248 über einen ungefähr mit der Brennweite 2f entsprechenden Weg kann trotz mehrfacher Refokussierung eine Vergrößerung des Brennfleckdurchmessers vermieden werden und somit eine optimale Leistungsdichte des Pumpstrahlungsfeldes im Festkörper zum Pumpen desselben erzeugt werden. Vorzugsweise haben die Refokussierungsoptiken eine Brennweite f und der kollimierte Ast wird über einen möglichst genau 2f entsprechenden Weg geführt.

Bei einer Variante des erfindungsgemäß dargestellten Ausführungsbeispiels besteht die Möglichkeit, das Segment $40_1$ des Parabolspiegels 40 zu eliminieren und unmittelbar mit einem fokussierten einfallenden Ast 44 das laseraktive Medium in dem Festkörper 10 anzuregen.

Ferner besteht als weitere Variante die Möglichkeit, die Umlenkoptiken 60, 160 und 260 statt mit reflektierenden Flächen 62 und 64 als Prismen auszubilden, wobei in diesem Fall die Veränderung der Abbildungsverhältnisse durch den sich ändernden Brechungsindex der Prismen zu berücksichtigen ist, um näherungsweise bezüglich des kollimierten Astes 148 dem Weg 2f entsprechende Abbildungsverhältnisse zu erreichen.

Ferner kann bei starker Absorption des Pumpstrahlungsfeldes in dem Festkörper und somit geringer Leistungsdichte anstelle des Reflektors 350 eine zweite Pumpstrahlungsquelle vorgesehen werden, die dem kollimierten Ast 348 entsprechendes kollimiertes Pumplicht auf das Segment $40_6$ fallen läßt, so daß dieses dann die Refokussierungsoptiken 270, 170 und 70 in umgekehrter Richtung durchläuft.

Bei einer weiteren Variante kann anstelle eines Parabolspiegels 40, der zumindest theoretisch ideale Abbildungsverhältnisse bei der Fokussierung auf den Festkörper 10 liefert, ein torischer Spiegel vorgesehen werden, der insbesondere bei langen Brennweiten eine ausreichende Abbildungsqualität liefert.

Um die Flächensegmente $42_1$ bis $42_8$ hinsichtlich ihrer Form optimal auszunutzen, ist es ferner denkbar, anstelle eines durch letztlich einen Lichtleiter erzeugten kollimierten Astes 36 eine Vielzahl von Lichtleitern einzusetzen, welche jeweils kollimierte Teiläste bilden, die sich dann zu einem insgesamt kollimierten Ast 36 zusammensetzen lassen, der in diesem Fall eine beliebige, durch die Anordnung der Enden der Lichtleiter in einer Ebene definierte Querschnittsform aufweisen kann und beispielsweise auch hinsichtlich seiner Querschnittsform an die Form des jeweiligen Flächensegments $42_1$ bis $42_8$ angepaßt ist.

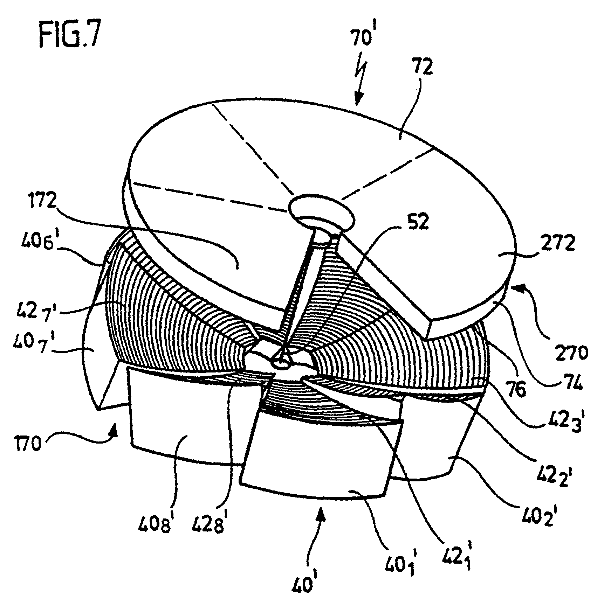

Bei einem weiteren Ausführungsbeispiel eines erfindungsgemäßen Laserverstärkungssystems, dargestellt in Fig. 7, sind die Umlenkelemente der einzelnen Refokussierungsoptiken 70', 170' und 270' durch Segmente 72, 172 und 272 eines Planspiegels 74 mit einer durchgehenden ebenen Reflexionsfläche 76 gebildet, während die einzelnen Segmente $40'_1$ bis $40'_8$ des Parabolspiegels 40' keine einheitliche parabolische Fläche mehr bilden, sondern mit ihren einzelnen Flächensegmenten $42'_1$ bis $42'_8$ so gekippt sind, daß die zu den Refokussierungsoptiken 70', 170' und 270' jeweils gehörenden Segmente $42'_5$ und $42'_4$ bzw. $40'_8$ und $40'_7$ bzw. $42'_3$ und $42'_2$ jeweils ein gegenüber der Normalen 52 gekippten kollimierten Teilast bilden, der durch Reflexion in den anderen Teilast des kollimierten Astes 48 übergeht, der ebenfalls gekippt gegenüber der Normalen 52 verläuft, während die jeweils ausfallenden Äste 46 bzw. 146 bzw. 246 und die jeweils einfallenden Äste 66 bzw. 166 bzw. 266 jeweils parallel und symmetrisch zu den Ebenen $50_1$ und $50_2$ bzw. $50_2$ und $50_3$ bzw. $50_3$ und $50_4$ verlaufen.

Die Segmente des Parabolspiegels 40' können, in gleicher Weise wie beim vorigen Ausführungsbeispiel auch Segmente eines torischen Spiegels sein.

**Patentansprüche**

1. Laserverstärkersystem umfassend einen ein laseraktives Medium aufweisenden Festkörper (10), eine Pumpstrahlungsquelle (33) zur Erzeugung eines Pumpstrahlungsfeldes, welches den Festkörper (10) mehrfach durchsetzt, eine Pumpstrahlungsabbildungsoptik (32, $40_1$), welche zwischen der Pumpstrahlungsquelle (33) und dem Festkörper (10) angeordnet ist und einen in den Festkörper (10) einfallenden Ast (44) des Pumpstrahlungsfeldes auf den Festkörper (10) fokussiert, und mindestens eine Refokussierungsoptik (70, 170, 270), welche einen aus dem Festkörper (10) ausfallenden Ast (46, 146, 246) des Pumpstrahlungsfeldes erneut in Form eines in den Festkörper einfallenden und vom ausfallenden Ast (46, 146, 246) verschiedenen Astes (66, 166, 266) auf den Festkörper (10) fokussiert,
   **dadurch gekennzeichnet,**
   **daß** die Refokussierungsoptik (70, 170, 270) den aus dem Festkörper (10) ausfallenden Ast (46, 146, 246) in einen zwischenkollimierten Ast (48, 148, 248) umformt und den zwischenkollimierten Ast (48, 148, 248) wiederum in den erneut in den Festkörper (10) einfallenden und auf diesen fokussierten Ast (66, 166, 266) umformt.

2. Laserverstärkersystem nach Anspruch 1, **dadurch gekennzeichnet, daß** das Pumpstrahlungsfeld mehrere Refokussierungsoptiken (70, 170, 270) in Reihe nacheinander durchsetzt.

3. Laserverstärkersystem nach Anspruch 2, **dadurch gekennzeichnet, daß** die einfallenden Äste (66, 166, 266) der mehreren Refokussierungsoptiken (70, 170, 270) stets in denselben Festkörper (10) einfallen.

4. Laserverstärkersystem nach Anspruch 1 oder 2, **dadurch gekennzeichnet, daß** die in denselben Festkörper (10) einfallenden Äste (66, 166, 266) in denselben Volumenbereich des Festkörpers (10) einfallen.

5. Laserverstärkersystem nach einem der vorstehenden Ansprüche, **dadurch gekennzeichnet, daß** jede Refokussierungsoptik (70, 170, 270) den aus dem Festkörper (10) ausfallenden Ast (46, 146, 246) des Pumpstrahlungsfeldes zu einem ersten Teilast (48a, 148a, 248a) des zwischenkollimierten Astes (48, 148, 248) umformt, diesen ersten Teilast (48a, 148a, 248a) in einen zweiten, neben diesem angeordneten Teilast (48b, 148b, 248b) des zwischenkollimierten Astes (48, 148, 248) umformt und aus dem zweiten Teilast den in den Festkörper (10) einfallenden Ast (66, 166, 266) formt.

6. Laserverstärkersystem nach Anspruch 5, **dadurch gekennzeichnet, daß** jede Refokussierungsoptik (70, 170, 270) ein Umlenkelement (60, 160, 260) zur Abbildung des ersten Teilastes (48a, 148a, 248a) des zwischenkollimierten Astes (48, 148, 248) in den zweiten Teilast (48b, 148b, 248b) desselben aufweist.

7. Laserverstärkersystem nach einem der vorstehenden Ansprüche, **dadurch gekennzeichnet, daß** jede Refokussierungsoptik (70, 170, 270) ein kollimierendes Element ($42_5$, $42_8$, $42_3$) zur Abbildung des ausfallenden Astes (46, 146, 246) in den zwischenkollimierten Ast (48, 148, 248) aufweist.

8. Laserverstärkersystem nach einem der vorstehenden Ansprüche, **dadurch gekennzeichnet, daß** jede Refokussierungsoptik (70, 170, 270) ein fokussierendes Element ($42_4$, $42_7$, $42_2$) zur Abbildung des zwischenkollimierten Astes (48, 148, 248) in den in den Festkörper (10) einfallenden Ast (66, 166, 266) aufweist.

9. Laserverstärkersystem nach einem der vorstehenden Ansprüche, **dadurch gekennzeichnet, daß** einer Flachseite des Festkörpers (10) ein Reflektor (12) zugeordnet ist und daß der ausfallende Ast (66, 166, 266) durch Reflexion des einfallenden Astes (46, 146, 246) an dem Reflektor (12) entsteht.

10. Laserverstärkersystem nach Anspruch 9, **dadurch gekennzeichnet, daß** ein Teilast (48a,b, 148a,b, 248a,b) des zwischenkollimierten Astes (48, 148, 248) jeder Refokussierungsoptik (70, 170, 270) parallel zu einer Normalen auf eine Reflexionsfläche des Reflektors verläuft.

11. Laserverstärkersystem nach Anspruch 10, **dadurch gekennzeichnet, daß** beide Teiläste (48a,b, 148a,b, 248a,b) des zwischenkollimierten Astes (48, 148, 248) der Refokussierungsoptiken (70, 170, 270) parallel zu der Normalen (52) verlaufen.

12. Laserverstärkersystem nach einem der vorstehenden Ansprüche, **dadurch gekennzeichnet, daß** ein in den Festkörper (10) einfallender Ast (44, 66, 166, 266) und der durch dessen Reflexion an dem Reflektor (12) entstehender ausfallender Ast (46, 146, 246, 346) des Pumpstrahlungsfeldes in einer durch die Normale (52) auf der Reflexionsfläche des Reflektors (12) verlaufenden Ebene ($54_1$, $54_2$, $54_3$, $54_4$) liegen.

13. Laserverstärkersystem nach Anspruch 12, **dadurch gekennzeichnet, daß** der aus dem Festkörper (10) ausfallende Ast und der in den Festkörper (10) einfallende Ast jeder Refokussierungsoptik (70, 170, 270) in unterschiedlichen, durch die Normale (52) hindurch verlaufenden Ebenen ($54_1$, $54_2$, $54_3$, $54_4$) liegen.

14. Laserverstärkersystem nach Anspruch 12 oder 13, **dadurch gekennzeichnet, daß** die kollimierenden Elemente ($42_5$, $42_8$, $42_3$) aller Refokussierungsoptiken (70, 170, 270) um die Normale (52) herum angeordnet sind.

15. Laserverstärkersystem nach Anspruch 14, **dadurch gekennzeichnet, daß** die kollimierenden Elemente aller Refokussierungsoptiken (70, 170, 270) in gleichem radialem Abstand um die Normale (52) herum angeordnet sind.

16. Laserverstärkersystem nach Anspruch 14 oder 15, **dadurch gekennzeichnet, daß** die kollimierenden Elemente aufeinanderfolgender Refokussierungsoptiken (70, 170, 270) in gleichen Winkelabständen um die Normale (52) herum angeordnet sind.

17. Laserverstärkersystem nach einem der Ansprüche 14 bis 16, **dadurch gekennzeichnet, daß** die kollimierenden Elemente aller Refokussierungsoptiken (70, 170, 270) identisch ausgebildet sind.

18. Laserverstärkersystem nach einem der Ansprüche 12 bis 17, **dadurch gekennzeichnet, daß** die fokussierenden Elemente ($42_4$, $42_7$, $42_2$) der Refokussierungsoptiken (70, 170, 270) um die Normale (52) herum angeordnet sind.

19. Laserverstärkersystem nach Anspruch 18, **dadurch gekennzeichnet, daß** die fokussierenden Elemente ($42_4$, $42_7$, $42_2$) aller Refokussierungsoptiken (70, 170, 270) in gleichen radialen Abständen um die Normale (52) angeordnet sind.

20. Laserverstärkersystem nach Anspruch 18 oder 19, **dadurch gekennzeichnet, daß** die fokussierenden Elemente ($42_4$, $42_7$, $42_2$) aufeinanderfolgenden Refokussierungsoptiken (70, 170, 270) in gleichen Winkelabständen um die Normale (52) angeordnet sind.

21. Laserverstärkersystem nach einem der Ansprüche 18 bis 20, **dadurch gekennzeichnet, daß** die fokussierenden Elemente ($42_4$, $42_7$, $42_2$) aller Refokussierungsoptiken (70, 170, 270) identisch ausgebildet sind.

22. Laserverstärkersystem nach einem der Ansprüche 7 bis 21, **dadurch gekennzeichnet, daß** die kollimierenden Elemente ($42_5$, $42_8$, $42_3$) durch Hohlspiegel gebildet sind.

23. Laserverstärkersystem nach Anspruch 22, **dadurch gekennzeichnet, daß** die kollimierenden Elemente ($42_5$, $42_8$, $42_3$) durch Segmente eines rotationssymmetrischen Spiegels (40) gebildet sind.

24. Laserverstärkersystem nach einem der Ansprüche 8 bis 23, **dadurch gekennzeichnet, daß** die fokussierenden Elemente ($42_4$, $42_7$, $42_2$) durch Hohlspiegel (40) gebildet sind.

25. Laserverstärkersystem nach Anspruch 24, **dadurch gekennzeichnet, daß** die fokussierenden Elemente ($42_4$, $42_7$, $42_2$) durch Segmente eines rotationssymmetrischen Spiegels (40) gebildet sind.

26. Laserverstärkersystem nach einem der Ansprüche 7 bis 25, **dadurch gekennzeichnet, daß** die kollimierenden Elemente ($42_5$, $42_8$, $42_3$) aller Refokussierungsoptiken (70, 170, 270) dieselbe Brennweite aufweisen.

27. Laserverstärkersystem nach einem der Ansprüche 8 bis 26, **dadurch gekennzeichnet, daß** die fokussierenden Elemente ($42_4$, $42_7$, $42_2$) aller Refokussierungsoptiken (70, 170, 270) dieselbe Brennweite aufweisen.

28. Laserverstärkersystem nach Anspruch 27, **dadurch gekennzeichnet, daß** die kollimierenden Elemente ($42_5$, $42_8$, $42_3$) und die fokussierenden Elemente aller Refokussierungsoptiken (70, 170, 270) durch Segmente eines einzigen rotationssymmetrischen Hohlspiegels (40) gebildet sind.

29. Laserverstärkersystem nach einem der Ansprüche 6 bis 28, **dadurch gekennzeichnet, daß** die Umlenkelemente (60, 160, 260) aller Refokussierungsoptiken (70, 170, 270) um die Normale (52) herum angeordnet sind.

30. Laserverstärkersystem nach Anspruch 29, **dadurch gekennzeichnet, daß** die Umlenkelemente (60, 160, 260) aller Refokussierungsoptiken (70, 170, 270) in gleichen radialen Abständen um die Normale (52) angeordnet sind.

31. Laserverstärkersystem nach Anspruch 30, **dadurch gekennzeichnet, daß** die Umlenkelemente (60, 160, 260) aufeinander folgender Refokussierungsoptiken (70, 170, 270) in gleichen Winkelabständen angeordnet sind.

**32.** Laserverstärkersystem nach Anspruch 31, **dadurch gekennzeichnet, daß** die Umlenkelemente (60, 160, 260) aller Refokussierungsoptiken (70, 170, 270) identisch ausgebildet sind.

## Claims

**1.** Laser amplification system comprising a solid-state body (10) having a laser-active medium, a pump radiation source (33) for generating a pump radiation field passing through the solid-state body (10) several times, an optical pump radiation imaging means (32, $40_1$) arranged between the pump radiation source (33) and the solid-state body (10) and focusing a leg (44) of the pump radiation field entering the solid-state body (10) onto the solid-state body (10), and at least one optical refocusing means (70, 170, 270) focusing a leg (46, 146, 246) of the pump radiation field exiting from the solid-state body (10) onto the solid-state body (10) again in the form of a leg (66, 166, 266) entering the solid-state body and different to the outgoing leg (46, 146, 246), **characterized in that** the. optical refocusing means (70, 170, 270) reshapes the leg (46, 146, 246) exiting from the solid-state body (10) into an intermediately collimated leg (48, 148, 248) and reshapes the intermediately collimated leg (48, 148, 248) again into the leg (66, 166, 266) entering the solid-state body (10) again and focused onto it.

**2.** Laser amplification system as defined in claim 1, **characterized in that** the pump radiation field passes through several optical refocusing means (70, 170, 270) in series one after the other.

**3.** Laser amplification system as defined in claim 2, **characterized in that** the incoming legs (66, 166, 266) of the several optical refocusing means (70, 170, 270) always enter the same solid-state body (10).

**4.** Laser amplification system as defined in claim 1 or 2, **characterized in that** the legs (66, 166, 266) entering the same solid-state body (10) enter the same volume area of the solid-state body (10).

**5.** Laser amplification system as defined in any one of the preceding claims, **characterized in that** each optical refocusing means (70, 170, 270) reshapes the leg (46, 146, 246) of the pump radiation field exiting from the solid-state body (10) to form a first partial leg (48a, 148a, 248a) of the intermediately collimated leg (48, 148, 248), reshapes this first partial leg (48a, 148a, 248a) into a second partial leg (48b, 148b, 248b) of the intermediately collimated leg (48, 148, 248) arranged next to said first partial leg and forms the leg (66, 166, 266) entering the solid-state body (10) from the second partial leg.

**6.** Laser amplification system as defined in claim 5, **characterized in that** each optical refocusing means (70, 170, 270) has a deflection element (60, 160, 260) for imaging the first partial leg (48a, 148a, 248a) of the intermediately collimated leg (48, 148, 248) into the second partial leg (48b, 148b, 248b) thereof.

**7.** Laser amplification system as defined in any one of the preceding claims, **characterized in that** each optical refocusing means (70, 170, 270) has a collimating element ($42_5$, $42_8$, $42_3$) for imaging the outgoing leg (46, 146, 246) into the intermediately collimated leg (48, 148, 248).

**8.** Laser amplification system as defined in any one of the preceding claims, **characterized in that** each optical refocusing means (70, 170, 270) has a focusing element ($42_4$, $42_7$, $42_2$) for imaging the intermediately collimated leg (48, 148, 248) into the leg (66, 166, 266) entering the solid-state body (10).

**9.** Laser amplification system as defined in any one of the preceding claims, **characterized in that** a reflector (12) is associated with a flat side of the solid-state body (10), and that the outgoing leg (66, 166, 266) results due to reflection of the incoming leg (46, 146, 246) at the reflector (12).

**10.** Laser amplification system as defined in claim 9, **characterized in that** a partial leg (48a,b, 148a,b, 248a,b) of the intermediately collimated leg (48, 148, 248) of each optical refocusing means (70, 170, 270) extends parallel to a normal line onto a reflection surface of the reflector.

**11.** Laser amplification system as defined in claim 10, **characterized in that** both partial legs (48a,b, 148a,b, 248a,b) of the intermediately collimated leg (48, 148, 248) of the optical refocusing means (70, 170, 270) extend parallel to the normal line (52).

**12.** Laser amplification system as defined in any one of the preceding claims, **characterized in that** a leg (44, 66, 166, 266) of the pump radiation field entering the solid-state body (10) and the outgoing leg (46, 146, 246, 346) thereof resulting due to reflection of said leg at the reflector (12) are located in a plane ($54_1$, $54_2$, $54_3$, $54_4$) extending through the normal line (52) to the reflection surface of the reflector (12).

**13.** Laser amplification system as defined in claim 12, **characterized in that** the leg of each optical refocusing means (70, 170, 270) exiting from the solid-state body (10) and the leg thereof entering the solid-state body (10) are located in different planes ($54_1$, $54_2$, $54_3$, $54_4$) extending through the normal line (52).

14. Laser amplification system as defined in claim 12 or 13, **characterized in that** the collimating elements ($42_5$, $42_8$, $42_3$) of all the optical refocusing means (70, 170, 270) are arranged around the normal line (52).

15. Laser amplification system as defined in claim 14, **characterized in that** the collimating elements of all the optical refocusing means (70, 170, 270) are arranged at the same radial distance around the normal line (52).

16. Laser amplification system as defined in claim 14 or 15, **characterized in that** the collimating elements of consecutive optical refocusing means (70, 170, 270) are arranged at the same angular distances around the normal line (52).

17. Laser amplification system as defined in any one of claims 14 to 16, **characterized in that** the collimating elements of all the optical refocusing means (70, 170, 270) are of identical design.

18. Laser amplification system as defined in any one of claims 12 to 17, **characterized in that** the focusing elements ($42_4$, $42_7$, $42_2$) of the optical refocusing means (70, 170, 270) are arranged around the normal line (52).

19. Laser amplification system as defined in claim 18, **characterized in that** the focusing elements ($42_4$, $42_7$, $42_2$) of all the optical refocusing means (70, 170, 270) are arranged at the same radial distances around the normal line (52).

20. Laser amplification system as defined in claim 18 or 19, **characterized in that** the focusing elements ($42_4$, $42_7$, $42_2$) of consecutive optical refocusing means (70, 170, 270) are arranged at the same angular distances around the normal line (52).

21. Laser amplification system as defined in any one of claims 18 to 20, **characterized in that** the focusing elements ($42_4$, $42_7$, $42_2$) of all the optical refocusing means (70, 170, 270) are of identical design.

22. Laser amplification system as defined in any one of claims 7 to 21, **characterized in that** the collimating elements ($42_5$, $42_8$, $42_3$) are formed by concave mirrors.

23. Laser amplification system as defined in claim 22, **characterized in that** the collimating elements ($42_5$, $42_8$, $42_3$) are formed by segments of a rotationally symmetrical mirror (40).

24. Laser amplification system as defined in any one of claims 8 to 23, **characterized in that** the focusing elements ($42_4$, $42_7$, $42_2$) are formed by concave mirrors (40).

25. Laser amplification system as defined in claim 24, **characterized in that** the focusing elements ($42_4$, $42_7$, $42_2$) are formed by segments of a rotationally symmetrical mirror (40).

26. Laser amplification system as defined in any one of claims 7 to 25, **characterized in that** the collimating elements ($42_5$, $42_8$, $42_3$) of all the optical refocusing means (70, 170, 270) have the same focal distance.

27. Laser amplification system as defined in any one of claims 8 to 26, **characterized in that** the focusing elements ($42_4$, $42_7$, $42_2$) of all the optical refocusing means (70, 170, 270) have the same focal distance.

28. Laser amplification system as defined in claim 27, **characterized in that** the collimating elements ($42_5$, $42_8$, $42_3$) and the focusing elements of all the optical refocusing means (70, 170, 270) are formed by segments of a single rotationally symmetrical concave mirror (40).

29. Laser amplification system as defined in any one of claims 6 to 28, **characterized in that** the deflection elements (60, 160, 260) of all the optical refocusing means (70, 170, 270) are arranged around the normal line (52).

30. Laser amplification system as defined in claim 29, **characterized in that** the deflection elements (60, 160, 260) of all the optical refocusing means (70, 170, 270) are arranged at the same radial distances around the normal line (52).

31. Laser amplification system as defined in claim 30, **characterized in that** the deflection elements (60, 160, 260) of consecutive optical refocusing means (70, 170, 270) are arranged at the same angular distances.

32. Laser amplification system as defined in claim 31, **characterized in that** the deflection elements (60, 160, 260) of all the optical refocusing means (70, 170, 270) are of identical design.

## Revendications

1. Système d'amplification laser comprenant un corps solide (10) présentant un milieu actif sous l'effet d'un laser, une source de rayonnement de pompage (33) pour générer un champ de rayonnement de pompage, traversant à plusieurs reprises le corps solide (10), une optique d'illustration de rayonnement de pompage (32, $40_1$), disposée entre la source de rayonnement de pompage (33) et le corps solide (10), et une branche (44), entrant dans le corps solide (10), du champ de rayonnement de pompage étant focalisée sur le corps solide (10), et au moins une optique de refocalisation (70, 170, 270) qui focalise sur le corps solide (10) une branche (46, 146, 246) sortant du corps solide (10) du champ de rayonnement de pompage, de nouveau sous la forme d'une branche (66, 166, 266) entrant dans le corps solide et différente de la branche sortante (46, 146, 246), **caractérisé en ce que** l'optique de refocalisation (70, 170, 270) reforme la branche (46, 146, 246) sortant du corps solide (10) en une branche (48, 148, 248) à collimation intermédiaire, et reforme la branche (48, 148, 248) à collimation intermédiaire, de nouveau, en la branche (66, 166, 266) entrant de nouveau dans le corps solide (10) et focalisée sur celui-ci.

2. Système d'amplification laser selon la revendication 1, **caractérisé en ce que** le champ de rayonnement de pompage traverse les unes après les autres en série plusieurs optiques de refocalisation (70, 170, 270).

3. Système d'amplification laser selon la revendication 2, **caractérisé en ce que** les branches 66, 166, 266) incidentes de la pluralité d'optique de. refocalisation (70, 170, 270) entrent toujours dans le même corps solide (10).

4. Système d'amplification laser selon la revendication 1 ou 2, **caractérisé en ce que** les branches (66, 166, 266) entrant dans le même corps solide (10) entrent dans la même zone de volume du corps solide (10).

5. Système d'amplification laser selon l'une des revendications précédentes, **caractérisé en ce que** chaque optique de refocalisation (70, 170, 270) reforme la branche (46, 146, 246), sortant du corps solide (10), du champ de rayonnement de pompage en une première branche partielle (48a, 148a, 248a) de la branche (48, 148, 248) à collimation intermédiaire, reforme cette première branche partielle (48a, 148a, 248a) en une deuxième branche partielle (48b, 148b, 248b), disposée à côté de celle-ci, de la branche (48, 148, 248) à collimation intermédiaire et, à partir de la deuxième branche partielle, forme la branche (66, 166, 266) entrant dans le corps solide (10).

6. Système d'amplification laser selon la revendication 5, **caractérisé en ce que** chaque optique de refocalisation (70, 170, 270) présente un élément déviateur (60, 160, 260) pour illustrer la première branche partielle (48a, 148a, 248a) de la branche (48, 148, 248) à collimation intermédiaire, dans la deuxième branche partielle (48b, 148b, 248b) de celui-ci.

7. Système d'amplification laser selon l'une des revendications précédentes, **caractérisé en ce que** chaque optique de refocalisaltion (70, 170, 270) présente un élément collimatant ($42_5$, $42_8$, $42_3$) pour illustrer la branche (46, 146, 246) sortant dans la branche (48, 148, 248 à collimation intermédiaire.

8. Système d'amplification laser selon l'une des revendications précédentes, **caractérisé en ce que** chaque optique de refocalisation (70, 170, 270) présente un élément focalisant ($42_4$, $42_7$, $42_2$) pour l'illustration de la branche (48, 48, 248) à collimation intermédiaire dans la branche (66, 166, 266) entrant dans le corps solide (10).

9. Système d'amplification laser selon l'une des revendications précédentes, **caractérisé en ce qu'**à une face plate du corps solide (10) est associé un réflecteur (12), et **en ce que** la branche (66, 166, 266) sortante est produite par réflexion de la branche (46, 146, 246) entrant sur le réflecteur (12).

10. Système d'amplification laser selon la revendication 9, **caractérisé en ce qu'**une branche partielle (48a,b, 148a,b, 248a,b) de la branche (48, 48, 248) à collimation intermédiaire de chaque optique de refocalisation (70, 170, 270) s'étend parallèlement à une normale d'une surface de réflexion du réflecteur.

11. Système d'amplification laser selon la revendication 10, **caractérisé en ce que** les deux branches partielles (48a,b, 148a,b, 248a,b) de la branche (48, 148, 248) à collimation intermédiaire de l'optique de refocalisation (70, 170, 270) s'étendent parallèlement à la normale (52).

12. Système d'amplification laser selon l'une des revendications précédentes, **caractérisé en ce qu'**une branche (44, 66, 166, 266) entrant dans le corps solide (10) et la branche (46, 146, 246, 346) sortant, produite par sa réflexion sur le réflecteur (12), du champ de rayonnement de pompage sont situées dans un plan ($54_1$, $54_2$, $54_3$) passant par la normale (52) sur la face de réflexion du réflecteur (12).

13. Système d'amplification laser selon la revendication 12, **caractérisé en ce que** la branche sortant du corps solide (10) et la branche entrant dans le corps solide (10) de chaque optique de refôcalisation (70, 170, 270) sont situées dans des plans ($54_1$, $54_2$, $54_3$, $54_4$) différents, passant par la normale (52).

14. Système d'amplification laser selon la revendication 12 ou 13, **caractérisé en ce que** les éléments collimatants ($42_5$, $42_8$, $42_3$) de toutes les optiques de refocalisation (70, 170, 270) sont disposés autour de la normale (52).

15. Système d'amplification laser selon la revendication 14, **caractérisé en ce que** les éléments collimatants de toutes les optiques de refocalisation (70, 170, 270) sont disposés au même espacement radial autour de la normale (52).

16. Système d'amplification laser selon la revendication 14 ou 15, **caractérisé en ce que** les éléments collimatants des optiques de refocalisation (70, 170, 270) successives sont disposés sous les mêmes espacements angulaires, autour de la normale (52).

17. Système d'amplification laser selon l'une des revendications 14 à 16, **caractérisé en ce que** les éléments collimatants de toutes les optiques de refocalisation (70, 170, 270) sont de configuration identique.

18. Système d'amplification laser selon l'une des revendications 12 à 17, **caractérisé en ce que** les éléments focalisants ($42_4$, $42_7$, $42_2$) des optiques de refocalisation (70, 170, 270) sont disposés autour de la normale (52).

19. Système d'amplification laser selon la revendication 18, **caractérisé en ce que** les éléments focalisants ($42_4$, $42_7$, $42_2$) de toutes les optiques de refocalisation (70, 170, 270) sont disposés sous les mêmes espacements radiaux autour de la normale (52).

20. Système d'amplification laser selon la revendication 18 ou 19, **caractérisé en ce que** les éléments focalisants ($42_4$, $42_7$, $42_2$) des optiques de refocalisation (70, 170, 270) successives sont disposés sous les mêmes espacements angulaires autour de la normale (52).

21. Système d'amplification laser selon l'une des revendication 18 à 20, **caractérisé en ce que** les éléments focalisants ($42_4$, $42_7$, $42_2$) de toutes les optiques de refocalisation (70, 170, 270) sont de configuration identique.

22. Système d'amplification laser selon l'une des revendications 7 à 21, **caractérisé en ce que** les éléments collimatants ($42_5$, $42_8$, $42_3$) sont formés par

des miroirs concaves.

23. Système d'amplification laser selon la revendication 22, **caractérisé en ce que** les éléments collimatants ($42_5$, $42_8$, $42_3$) sont formés par des segments d'un miroir (40) répondant à une symétrie de rotation.

24. Système d'amplification laser selon l'une des revendications 8 à 23, **caractérisé en ce que** les éléments focalisants ($42_4$, $42_7$, $42_2$) sont formés par des miroirs concaves (40).

25. Système d'amplification laser selon la revendication 24, **caractérisé en ce que** les éléments focalisants ($42_4$, $42_7$, $42_2$) sont formés par des segments d'un miroir (40) répondant à une symétrie de rotation.

26. Système d'amplification laser selon l'une des revendications 7 à 25, **caractérisé en ce que** les éléments collimatants ($42_5$, $42_8$, $42_3$) de toutes les optiques de refocalisation (70, 170, 270) ont la même distance focale.

27. Système d'amplification laser selon l'une des revendications 8 à 26, **caractérisé en ce que** les éléments focalisants ($42_4$, $42_7$, $42_2$) de toutes les optiques de refocalisation (70, 170, 270) ont la même distance focale.

28. Système d'amplification laser selon la revendication 27, **caractérisé en ce que** les éléments collimatants ($42_5$, $42_8$, $42_3$) et les éléments focalisants de toutes les optiques de refocalisation (70, 170, 270) sont formés par des segments d'un miroir concave (40) unique, répondant à une symétrie de rotation.

29. Système d'amplification laser selon l'une des revendications 6 à 28, **caractérisé en ce que** les éléments déviateurs (60, 160, 260) de toutes les optiques de refocalisation (70, 170, 270) sont disposés autour de la normale (52).

30. Système d'amplification laser selon la revendication 29, **caractérisé en ce que** les éléments déviateurs (60, 160, 260) de toutes les optiques de refocalisation (70, 170, 270) sont disposés sous les mêmes espacements radiaux autour de la normale (52).

31. Système d'amplification laser selon la revendication 30, **caractérisé en ce que** les éléments déviateurs (60, 160, 260) des optiques de refocalisation (70, 170, 270) se suivant sont disposés sous les mêmes espacements angulaires.

**32.** Système d'amplification laser selon la revendication 31, **caractérisé en ce que** les éléments déviateurs (60, 160, 260) de toutes les optiques de refocalisation (70, 170, 270) sont de configuration identique.

FIG.1

FIG.2

FIG.3a

FIG.3b

FIG.3c

FIG.3d

FIG.4a

FIG.4b

FIG.4c

FIG.4d

## FIG.5a

## FIG.5b

## FIG.5c

## FIG.5d

FIG.6

## FIG.7